Europäisches Patentamt

European Patent Office

Office européen des brevets

(19)

(11) **EP 0 752 170 B1**

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(21) Anmeldenummer: **94911073.8**

(22) Anmeldetag: **24.03.1994**

(51) Int Cl.⁶: **H02P 5/40**

(86) Internationale Anmeldenummer:
**PCT/DE94/00335**

(87) Internationale Veröffentlichungsnummer:
**WO 95/26072 (28.09.1995 Gazette 1995/41)**

(54) **STROMREGELVERFAHREN UND VORRICHTUNG FÜR EINE DREIPHASIGE STROMRICHTERGESPEISTE, PERMANENTERREGTE SYNCHRONMASCHINE**

CURRENT REGULATION PROCESS AND DEVICE FOR A THREE-PHASE, STATIC-CONVERTER FED, PERMANENTLY EXCITED SYNCHRONOUS MACHINE

PROCEDE DE REGULATION DE COURANT ET APPAREIL POUR MACHINES SYNCHRONES TRIPHASEES A EXCITATION PERMANENTE ALIMENTEES PAR UN REDRESSEUR DE COURANT

(84) Benannte Vertragsstaaten:
**CH DE FR GB IT LI**

(43) Veröffentlichungstag der Anmeldung:
**08.01.1997 Patentblatt 1997/02**

(73) Patentinhaber: **SIEMENS AKTIENGESELLSCHAFT
80333 München (DE)**

(72) Erfinder:
• **MANNEL, Ulrike
  D-96253 Untersiemau (DE)**
• **TÖLLE, Hans-Jürgen
  D-90419 Nürnberg (DE)**

(56) Entgegenhaltungen:
**EP-A- 0 350 716          DE-A- 3 131 344**

• **TECHNISCHE RUNDSCHAU, Bd.81, Nr.10, 10. März 1989, BERN CH Seiten 60 - 65, XP105960 WOLFGANG AMRHEIN 'Die elektronische Reduktion von Drehmomentschwankungen an Permanentmagnetmotoren'**

**Beschreibung**

Die Erfindung bezieht sich auf ein Stromregelverfahren für eine dreiphasig stromrichtergespeiste, permanenterregte Synchronmaschine mit einer trapezförmigen Polradspannung, wobei auf der Motorwelle eine Winkelmeßeinrichtung angebracht ist, der eine Auswerteschaltung nachgeschaltet ist, an deren Ausgängen ein Drehzahl-Istwert und ein Rotorlagewinkel-Istwert anstehen, sowie auf eine Vorrichtung zur Durchführung des Verfahrens.

Aus der EP 0 350 716 B1 ist eine permanenterregte Synchronmaschine mit einer trapezförmigen Polradspannung bekannt, die mit blockförmigen Phasenströmen betrieben wird. Der Regelkreis einer derartigen Synchronmaschine enthält einen Stromregler, dem ein Pulsweitenmodulator nachgeschaltet ist. Der aktuelle Stromistwert wird mittels zweier gemessener Phasenströme und des Rotorlagewinkel-Istwertes ermittelt. Anschließend erfolgt die Berechnung der Regeldifferenz aus einem Stromsoll- und dem ermittelten Stromistwert. Mit Hilfe des Pulsweitenmodulators werden aus der Reglerausgangsspannung die Ansteuersignale für die Leistungshalbleiter des Wechselrichters gebildet, die mittels der Lagegebersignale auf die entsprechenden Brückenzweige des Wechselrichters verteilt werden. Wird die Synchronmaschine mit exakt 120° langen, rechteckförmigen Strömen und einer ideal trapezförmigen Polradspannung betrieben, so ist die Momentenwelligkeit gleich Null. Ein solcher Betrieb der Maschine wäre erwünscht, kann aber in der Realität nicht verwirklicht werden, da eine unendlich hohe Spannung wegen der Wicklungsinduktivität notwendig wäre, um den Blockstrom bzw. die steilen Flanken des Stromes zu realisieren, und die Stromrichterventile ein unendlich schnelles und verzögerungsfreies Schalten aufweisen müßten. Außerdem ist die Polradspannung der permanenterregten Synchronmaschine nicht exakt trapezförmig.

Ein weiterer Nachteil dieser Regelung besteht darin, daß während einer Kommutierung ein Einbruch im Strom der nicht an der Kommutierung beteiligten Phase erfolgt. Dies führt zu starken Pendelmomenten sowie zu Stromoberschwingungen auf der Gleichspannungs-Einspeiseseite des Wechselrichters und somit zu pendelnden Eingangsleistungen. In der bereits erwähnten EP 0 350 716 B1 ist ein Verfahren zur Verringerung von derartigen Stromeinbrüchen angegeben.

Je steiler die Flanke des Stromblockes wird, desto mehr wird der ideale Blockstrom angenähert. Da eine steilere Flanke mehr Spannungsreserve benötigt bzw. auch die Belastung auf der Zuleitung und der Wicklung der permanenterregten Synchronmaschine durch die Spannungssteilheit steigt, kann diese nur begrenzt realisiert werden. Die Steilheit der Stromflanken hat nur eine geringe Auswirkung auf die ausgewerteten Größen von aufgenommener und abgegebener Leistung, Wirkungsgrad und die Ausnutzung. Jedoch beeinflußt diese stark die Zwischenkreisstrom- bzw die Batteriestrom- und Momentenwelligkeit eines Antriebs, insbesondere eines Antriebs eines Elektrofahrzeugs. Ist eine flache Stromflanke günstiger für den Zwischenkreisstrom bzw. den Batteriestrom, so hat diese eine größere Drehmomentwelligkeit zur Folge.

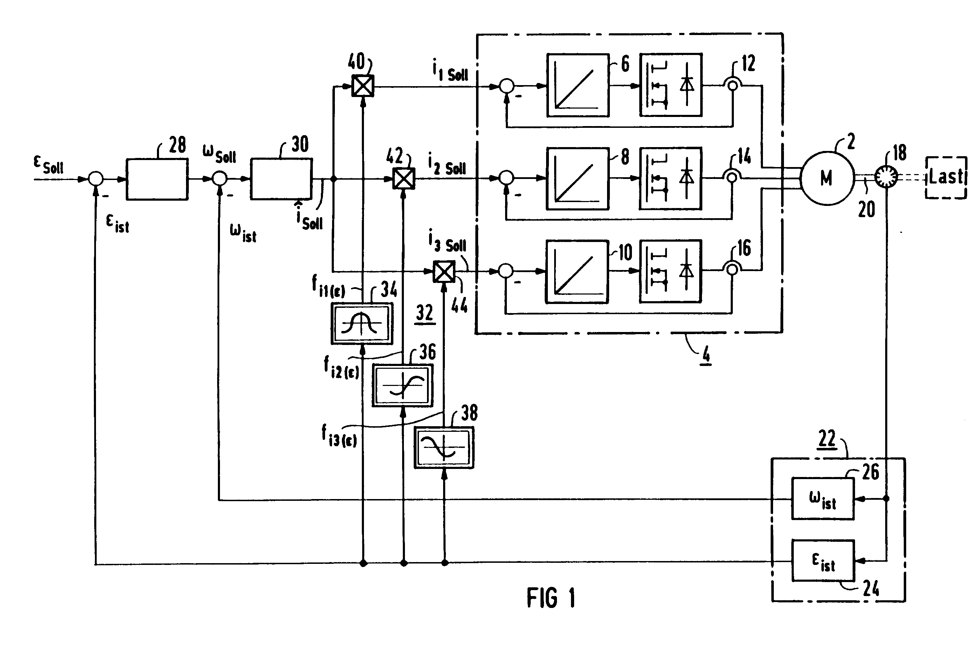

Aus der Dissertation von Herrn Martin Schröder mit dem Titel "Hochtouriger bürstenloser Positionsantrieb mit extrem geringer Momentenwelligkeit", 1986, ist ein Stromregelverfahren für eine dreiphasig stromrichtergespeiste, permanenterregte Synchronmaschine mit einer trapezförmigen Polradspannung bekannt. Eine Vorrichtung zur Durchführung dieses Stromregelverfahrens ist in der Figur 1 näher dargestellt. Die Speisung der Maschine 2 erfolgt durch einen Vierquadranten-Pulsumrichter 4 mit Spannungszwischenkreis, der mit Feldeffekt-Leistungstransistoren ausgestattet ist. Die drei Strangstrom-sollwerte werden dem Umrichter 4 in analoger Form als Spannungen zugeführt. Die Strangstromregler 6, 8 und 10 sind ebenso wie die Strommeßstellen 12, 14 und 16 Bestandteil des Wechselrichters 4. Da die Stromregelung nach einem schaltenden Prinzip arbeitet und die Winklungsinduktivität wegen des großen magnetisch wirksamen Luftspalts relativ klein ist, werden zur Stromglättung Vorschaltdrosseln in den Maschinenzuleitungen benötigt, die nicht näher dargestellt sind. Diese Vorschaltdrosseln befinden sich ebenfalls im Wechselrichter 4. Zur Istwerterfassung des Drehzahl-Istwertes $\omega_{ist}$ und des Lagewinkel-Istwertes $\varepsilon_{ist}$ befindet sich ein inkrementaler Winkelcodierer 18 auf der Motorwelle 20, der zwei um $\pi/2$ phasenverschobene Ausgangssignale liefert. Aus diesen Signalen wird mittels einer Auswerteschaltung 22, die zwei Zählerschaltungen 24 und 26 enthält, der digitale Lage-Istwert $\varepsilon_{ist}$ und der Drehzahl-Istwert $\omega_{ist}$ aus den Signalen des Winkelcodierers 18, auch Rotorlagegeber genannt, gewonnen.

Der Lage- und Drehzahlregler 28 und 30 sind in Form von Programmen in einem Mikrorechner realisiert, so daß die in digitaler Form erzeugten Istwerte $\varepsilon_{ist}$ und $\omega_{ist}$ direkt verarbeitet werden können. Die Reglerprogramme werden in einem festen Zeitraster aufgerufen und berechnen anhand des aktuellen Lage- bzw. Drehzahl-Istwertes $\varepsilon_{ist}$ bzw. $\omega_{ist}$ den neuen Drehzahl-Sollwert $\omega_{soll}$ bzw. den Stromamplituden-Sollwert $\hat{i}_{soll}$. Der Drehzahl-Sollwert $\omega_{soll}$ wird mikrorechnerintern vom Lagereglerprogramm an das Drehzahlreglerprogramm übergeben. Die Ausgabe des Stromamplituden-Sollwertes $\hat{i}_{soll}$ an den Stromsollwert-Generator 32 erfolgt über einen nicht näher dargestellten Digital/Analog-Wandler. Im Stromsollwert-Generator 32 befinden sich drei Speicher 34, 36 und 38, in denen drei auf die Amplitude $\hat{i}_{soll}$ bezogene Strangstrom-Sollwertverläufe als Funktionen des Lauferwinkels $\varepsilon$ in Tabellenform abgelegt sind. Durch die Multiplikation der anhand des Läuferwinkel-Istwertes $\varepsilon_{ist}$ gefundenen Tabellenwertes mit der Strangstrom-Sollwertamplitude $\hat{i}_{soll}$ mittels dreier Multiplizierer 40, 42 und 44 entstehen die drei Strangstrom-Sollwerte $i_{1soll}$, $i_{2soll}$ und $i_{3soll}$, die dem Umrichter 4 zugeführt werden.

Die in den Speichern 34, 36 und 38 abgelegten Funktionen $f_{i1(\varepsilon)}$, $f_{i2(\varepsilon)}$ und $f_{i3(\varepsilon)}$ sind so gewählt, daß sich bei konstanter Stromsollwert-Amplitude $\hat{i}_{soll}$ ein konstantes Drehmoment bildet. Die Berechnung dieser Funktionen ist im Kapitel 2.3 dieser Dissertation behandelt.

Zur Berechnung der Funktionen $f_{i1(\varepsilon)}$, $f_{i2(\varepsilon)}$ und $f_{i3(\varepsilon)}$ wird als erste Bestimmungsgleichung die Gleichung des inneren Drehmoments für eine dreisträngige Synchronmaschine verwendet (Gleichung 2.2 der Dissertation). Um einen einfachen Umrichteraufbau zu erhalten, wird gefordert, daß die Summe der Ströme zu jedem Zeitpunkt gleich Null sein muß. Da zur Bestimmung der drei Strangstrom-Sollwerte nur zwei Gleichungen zur Verfügung stehen, existieren unendlich viele Lösungen. Mittels einer Zusatzbedingung, deren mathematische Formulierung in den Gleichungen 2.4 bis 2.6 der Dissertation dargestellt sind, erhält man aus der Fülle der möglichen Lösungen eine einzige. Ersetzt man mit Hilfe der Gleichungen 2.2 und 2.3 der Dissertation die Ströme $i_{2soll}$ und $i_{3soll}$ durch Funktionen von $i_{1soll}$, so erhält man die Gleichungen 2.7, 2.8 und 2.9 der Dissertation für die Zusatzbedingungen. Damit liegt ein isoperimetrisches Variationsproblem mit einer unbekannten Funktion $i_{1soll}$ (t) und zwei Nebenbedingungen vor. Als Lösung dieses Variationsproblems erhält man die Funktionen $f_{i1(\varepsilon)}$, $f_{i2(\varepsilon)}$ und $f_{i3(\varepsilon)}$, die vorab berechnet und als Tabelle abgespeichert werden, da ausschließlich Größen eingehen, die durch die Maschinenkonstruktion bereits festgelegt sind. Damit ist der Rechenaufwand im Echtzeitbetrieb verringert, so daß auch bei hohen Drehzahlstromsollwerten $i_{1soll}$, $i_{2soll}$ und $i_{3soll}$ erzeugt werden können.

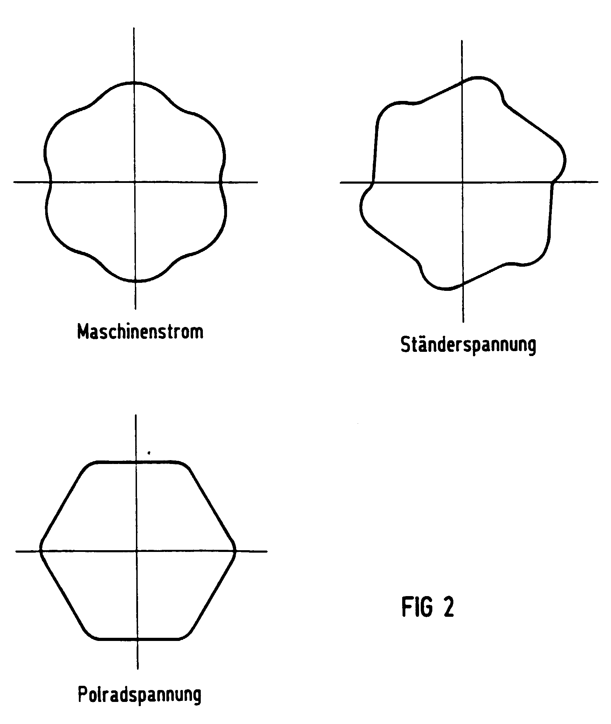

Mittels diesem bekannten Stromregelverfahren werden oberschwingungsbehaftete Ströme in die Maschine eingeprägt, die annähernd keine Pendelmomente erzeugen. Die Ortskurve dieses Stromes, der Speisespannung und der Polradspannung der Synchronmaschine 2 ist jeweils in einem Diagramm (komplexes Koordinatensystem) der Figur 2 dargestellt.

Im Gegensatz zu einem Servoantrieb spielen die Pendelmomente in einem Elektrofahrzeug bei höheren Drehzahlen eine untergeordnete Rolle, da diese durch die Trägheit des Getriebes, der Schwungscheibe und der Karosserie verringert werden. Im Anfahrbereich ist es wünschenswert, ein möglichst glattes Drehmoment zu erhalten, um Anfahrgeräusche und Drehschwingungen zu vermeiden. Dagegen sollte der Batteriestrom eine geringe Welligkeit aufweisen, um die Batterie des Elektrofahrzeugs wenig zu belasten. Auch für nachfolgende Geräte, wie z.B. Ladegeräte oder Batteriemanager, zeigt eine hohe Batteriestromwelligkeit ein ungünstiges Verhalten.

Bei netzgespeisten Umrichtern, bestehend aus einem netzseitigen Gleichrichter, einem Spannungszwischenkreis und einem Wechselrichter, belastet eine hohe Zwischenkreisstromwelligkeit den Zwischenkreiskondensator. Außerdem wird dadurch das Netz mit Harmonischen mit dem Vielfachen der Maschinenfrequenz belastet. D.h., der netzgespeiste Umrichter ist weniger netzfreundlich.

Der Erfindung liegt nun die Aufgabe zugrunde, ein Stromregelverfahren und eine Vorrichtung zur Durchführung des Stromregelverfahrens anzugeben, bei dem die beschriebenen Nachteile der vorgestellten Stromregelverfahren weitgehend vermieden werden sollen, wobei der Aufwand in Grenzen gehalten werden soll.

Diese Aufgabe wird erfindungsgemäß durch die im Anspruch 1 und im Anspruch 5 angegebenen Merkmale gelöst.

Dadurch, daß der Betrag des Stromistwert-Raumzeigers mit der normierten Polradspannung multipliziert wird, erhält man einen konstanten Strombetrag, der den Stromreglern zugeführt wird. Dadurch wird bei kleinen Drehzahlen der Synchronmaschine der Maschine ein Stromverlauf eingeprägt, der oberschwingungsbehaftet ist, wodurch die Momentenwelligkeit gering gehalten wird, wie beim Stromregelverfahren gemäß der Figur 1 (Dissertation). Bei hohen Drehzahlen dagegen greifen die Regler bezogen auf die Grundschwingungsperiode nur noch selten ein, d.h., die Ausgangsspannungen der Regler verändern sich kaum noch, wodurch eine sinusförmige Spannung an der Synchronmaschine anliegt. Dadurch wird der Zwischenkreisstrom bzw. der Batteriestrom günstig beeinflußt, wogegen die Momentenwelligkeit wieder etwas zunimmt. Da die Polradspannung in der Maschine durch den trapezförmigen Verlauf oberschwingungsbehaftet ist, bilden sich auch Oberschwingungsanteile im Strom aus. Sie haben zur Folge, daß sich bei höheren Drehzahlen und steigender Belastung die Pendelungen der Eingangsleistung reduzieren.

Somit erhält man ein Stromregelverfahren, das bei kleinen Drehzahlen einen oberschwingungsbehafteten Strom wie bei den Stromregelverfahren gemäß der Dissertation einprägt, wobei jedoch der Aufwand erheblich reduziert ist und das bei höheren Drehzahlen eine sinusförmige Eingangsspannung an die Synchronmaschine legt, so daß die Zwischenkreisstrom- bzw. die Batteriestromwelligkeit geringer ist als beim Stromregelverfahren nach der Dissertation, wobei diese Welligkeit sogar mit steigender Belastung abnimmt. Das heißt, man erzielt mit dem erfindungsgemäßen Verfahren bei klein en Drehzahlen annähernd ähnliche Ergebnisse wie mit dem Stromregelverfahren gemäß der Dissertation, jedoch im Bezug auf die Eingangsleistung bei hohen Drehzahlen bessere Ergebnisse. Außerdem ist die Vorrichtung zur Durchführung des erfindungsgemäßen Verfahrens einfacher aufgebaut.

Vorteilhafte Ausführungsformen des Verfahrens und der Vorrichtung sind den abhängigen Ansprüchen 2 bis 4, 6 und 7 zu entnehmen.

Zur weiteren Erläuterung der Erfindung wird auf die Zeichnung bezug genommen, in der ein Ausführungsbeispiel einer Vorrichtung zur Durchführung des erfindungsgemäßen verfahrens schematisch veranschaulicht ist.

Figur 1        zeigt eine aus der Dissertation Schröder bekannte Stromregelvorrichtung, die

Figur 2     zeigt jeweils in einem Diagramm die Ortskurve des eingeprägten Stromes, der Eingangsspannung und der Polradspannung der permanenterregten Synchronmaschine, die mit dem bekannten Stromregelverfahren nach Figur 1 geregelt wird, in der

Figur 3     ist eine Vorrichtung zur Durchführung des erfindungsgemäßen Stromregelverfahrens dargestellt, die

Figur 4     zeigt jeweils in einem Diagramm die Ortskurven des Stromes, der Eingangsspannung und der Polradspannung der Synchronmaschine bei hohen Drehzahlen, die mit dem erfindungsgemäßen Verfahren geregelt wird, die

Figur 5     zeigt einen Ausschnitt aus der Ortskurve der trapezförmigen Polradspannung, die

Figur 6     zeigt den Raumzeiger der Maschinenspannung bei kleinen Drehzahlen, wobei die

Figur 7     den Raumzeiger der Maschinenspannung bei hohen Drehzahlen darstellt und die

Figur 8     zeigt ein Zeigerdiagramm zur Ermittlung der Batterieleistung.

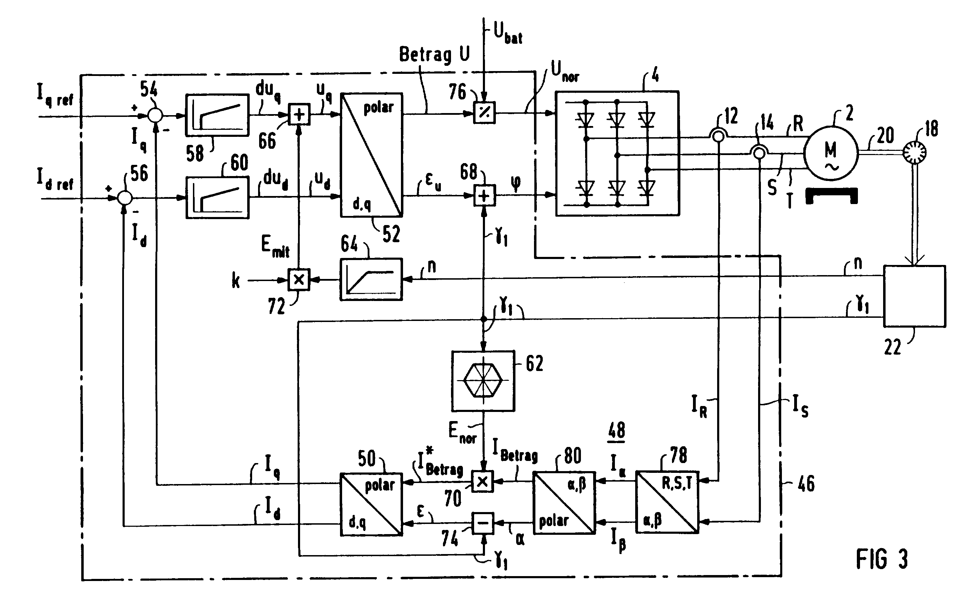

Die Figur 3 zeigt ein Blockschaltbild einer Vorrichtung 46 zur Durchführung des erfindungsgemäßen Stromregelverfahrens für eine dreiphasig stromrichtergespeiste, permanenterregte Synchronmaschine 2 mit annähernd trapezförmiger Polradspannung E. Wie bei der Vorrichtung gemäß der Figur 1 befindet sich zur Istwerterfassung von Drehzahl-Istwert n und Rotorlagewinkel-Istwert $\gamma_1$ ein Rotorlagegeber 18 auf der Motorwelle 20, der zwei um $\pi/2$ phasenverschobene Ausgangssignale liefert. Aus diesen Signalen werden mittels der Auswerteschaltung 22 die Istwerte n und $\gamma_1$ gewonnen. Als Umrichter 4 ist ein sechspulsiger Pulswechselrichter vorgesehen, der aus einer Stellgröße $\underline{U}$ (Spannungs-Raumzeiger), von dem die Polarkomponenten $U_{nor}$ und Winkel $\varphi$ bekannt sind, mittels eines Raumzeiger-Modulators die Steuersignale für die Stromrichterventile des Pulswechselrichters 4 generiert. In der deutschen Patentschrift 31 31 344 ist ein Steuerverfahren und eine Steuereinrichtung für einen Pulswechselrichter angegeben (Raumzeiger-Modulationsverfahren), wobei in der DE-Zeitschrift "Antriebstechnik", Band 27, 1988, Nr. 4, Seiten 38, 40 und 42, eine weitere Ausführungsform (Mikroprozessorlösung) für einen Raumzeiger-Modulator beschrieben ist. Dieser Modulator ist in der schematischen Darstellung der Figur 3 nicht näher dargestellt. Außerdem sind nur zwei Strommeßstellen 12 und 14 vorgesehen, mit denen die Strangstrom-Istwerte $I_R$ und $I_S$ gemessen werden.

Die Vorrichtung 46 besteht aus einer eingangsseitig angeordneten Transformationseinrichtung 48, zwei Koordinatenwandlern 50 und 52, zwei Vergleichern 54 und 56, zwei Stromreglern 58 und 60, einer Einrichtung 62 zur Bildung eines Wertes einer normierten Polradspannung $E_{nor}$ und einem Kennliniengeber 64.

Außerdem weist diese vorteilhafte Vorrichtung zwei Addierer 66 und 68, zwei Multiplizierer 70 und 72, einen Subtrahierer 74 und einen Dividierer 76 auf. Die eingangsseitige Transformationseinrichtung 48 besteht aus einer Vorrichtung 78 zur Bestimmung der Stromkomponenten $I_\alpha$ und $I_\beta$ des Stromistwert-Raumzeigers im ständerfesten Koordinatensystem und einem Koordinatenwandler 80, der die ständerorientierten kartesischen Stromkomponenten $I_\alpha$ und $I_\beta$ in ständerorientierten polaren Stromkomponenten $I_{Betrag}$ und $\alpha$ umwandelt. Die Vorrichtung 78 und der Koordinatenwandler 50, 52 und 80 sind bekannte Einrichtungen einer jeden feldorientierten Regelung.

Die Einrichtung 62 kann eine Recheneinrichtung oder ein Speicher sein, in der eine Umrechnungs-Tabelle von Rotorlagewinkel-Istwerten $\gamma_1$ in normierten Polradspannungs-Werten $E_{nor}$ abgespeichert sind. Wenn als Einrichtung 62 eine Recheneinrichtung vorgesehen ist, berechnet man diese Recheneinrichtung anhand der folgenden Formeln:

$$\varphi = \text{Mod}\left(\frac{\gamma}{60°}\right) \qquad\qquad (1)$$

$$\left|\underline{E}_{nor}\right| = \sqrt{E_\alpha^2 + E_\beta^2} = \frac{\frac{1}{2}\cdot\sqrt{3}}{\sin(120° - \varphi)} \qquad\qquad (2)$$

fortlaufend den Wert der normierten Polradspannung $E_{nor}$ in Abhängigkeit des Lagewinkel-Istwertes $\gamma_1$.

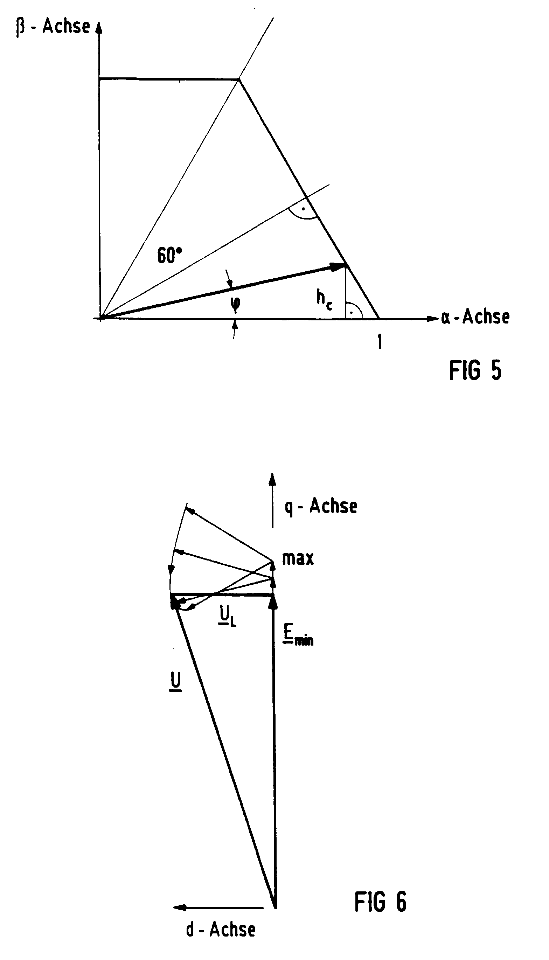

Zur Herleitung der Formel (2) wird die Figur 5 verwendet. Für die Berechnung der Länge des Polradzeigers in Abhängigkeit des Drehwinkels kann man die Winkelbeziehung für ein allgemeines Dreieck ansetzen. Dabei wird die Länge des Zeigers, auch EMK-Zeiger genannt, auf eine normierte Länge von eins bezogen und in das ständerfeste $\alpha,\beta$-Koordinatensystem transformiert. Sind die $\alpha$- und $\beta$-Komponenten für einen 60°-Bereich bekannt, so kann auf dem restlichen Winkelbereich durch Rückführung des Winkels auf einen 60°-Kreissektor und mit Hilfe der Polartransformation umgerechnet werden. Die Figur 5 verdeutlicht die Zusammenhänge. Für die Höhe $h_c$ in einem beliebigen Dreieck gilt:

$$E_\beta = h_c = \frac{1}{2}\cdot\sqrt{3}\cdot\frac{\sin\varphi}{\sin(120° - \varphi)} \qquad\qquad (3)$$

mit der Beziehung für ein rechtwinkliges Dreieck

$$\frac{E_\beta}{E_\alpha} = \tan\varphi = \frac{\sin\varphi}{\cos\varphi}$$

$$E_\alpha = \frac{\sin\varphi}{\cos\varphi} \cdot E_\beta = \frac{1}{2} \cdot \sqrt{3} \cdot \frac{\cos\varphi}{\sin(120° - \varphi)} \tag{4}$$

Für den normierten Betrag gilt:

$$\left|\underline{E}_{nor}\right| = \sqrt{E_\alpha^2 + E_\beta^2} = \frac{\frac{1}{2} \cdot \sqrt{3}}{\sin(120° - \varphi)} \tag{2}$$

Allgemein für einen Drehwinkel $\gamma$ gilt mit der Beziehung (2)

$$\varphi = \text{Mod}\left(\frac{\gamma}{60°}\right) \tag{1}$$

$$E_\alpha = \left|E_{nor}\right| \cdot \cos(\gamma)$$

$$\tag{5}$$

$$E_\beta = \left|E_{nor}\right| \cdot \sin(\gamma)$$

Diese Berechnung können auch off-line gemacht werden, wobei die Ergebnisse dann in einer Umrechnungs-Tabelle abgelegt werden.

Mit Hilfe der normierten Polradspannung $E_{nor}$ wird die ständerorientierte Polarkomponente $I_{Betrag}$ des Stromistwert-Raumzeigers bewertet. Dazu wird die ständerorientierte Polarkomponente $I_{Betrag}$ mittels des Multiplizierers 70 mit einem Wert der normierten Polradspannung $E_{nor}$ berechnet, wobei dieser Wert zwischen 0 und 1 liegt. Somit erhält man eine ständerorientierte Polarkomponente $I^*_{Betrag}$, der konstant ist, wenn gilt:

$$P_i = \left|\underline{U}_p\right| \cdot \left|\underline{I}\right| = \text{konstant}; \qquad E_{nor} = \frac{\left|\underline{U}_p\right|}{\left|\underline{U}_p\right| max}; \qquad E_{nor} \cdot \left|\underline{I}\right| = I^*_{Betrag}$$

Ist die innere Leistung $P_i$ der Synchronmaschine unabhängig, so muß auch dies für den mit $E_{nor}$ bewerteten Strom-zeiger gelten. Dieser bewertete Stromzeiger mit den Komponenten $I^*_{Betrag}$ und $\alpha$ wird nun in ein läuferfestes Koordinatensystem (d,q-System) transformiert. Dazu wird vom Winkel $\alpha$ der aktuelle Läuferflußwinkel $\gamma_1$ mittels des Subtra-hierers 74 subtrahiert. Als Ergebnis erhält man die Polarkoordinaten $I^*_{Betrag}$ und $\varepsilon$ des bewerteten Stromistwert-Raum-zeigers im läuferflußorientierten Koordinatensystem. Diese Polarkoordinaten $I^*_{Betrag}$ und $\varepsilon$ werden mittels des Koor-dinatenwandlers in läuferflußorientierte kartesische $\beta$-komponenten $I_d$ und $I_q$ umgewandelt. Diese Läuferflußorientierten Komponenten $I_d$ und $I_q$ des bewerteten Stromistwert-Raumzeigers werden jeweils einem negativen Eingang der Vergleicher 56 und 54 zugeführt, an deren positiven Eingängen jeweils ein Sollwert $I_{dref}$ und $I_{qref}$ anstehen. Aus den ermittelten Regelabweichungen werden mittels der Stromregler 60 und 58 Reglerausgangsspannungen $dU_d$ und $dU_q$ gewonnen, die mittels des Koordinatenwandlers 52 bereits in Polarkomponenten U und $\varepsilon_u$ umgewandelt werden könn-ten. Zur Entlastung des Stromreglers 58 wird zur Reglerausgangsspannung $dU_q$ mittels des Addierers 66 die mittlere Polradspannung $E_{mit}$ addiert, so daß der Stromregler 58 nur noch die Abweichungen von der mittleren Polradspannung $E_{mit}$ ausregeln muß. Die mittlere Polradspannung $E_{mit}$ ist von der Drehzahl n abhängig. Deshalb wird mittels des Kennliniengebers 64 in Abhängigkeit des Drehzahl-Istwertes n und einer Konstanten k jeweils die zugehörige mittlere Pol-radspannung $E_{mit}$ erzeugt. Die Polarkomponenten $U_{Betrag}$ und $e_u$ des läuferflußorientierten Spannungs-Raumzeigers (Stellgröße) werden nun, indem man zu $\varepsilon_u$ den aktuellen Läuferflußwinkel $\gamma_1$ mit dem Addierer 68 addiert, in ständerorientierte Polarkomponenten $U_{Betrag}$ und $\varphi$ gewandelt.

Die ständerorientierte Polarkomponente $U_{Betrag}$ wird noch mit der Batteriespannung $U_{Bat}$ bei der Verwendung in einem Elektrofahrzeug bzw. mit der Zwischenkreisspannung des Umrichters normiert. Diese Polarkomponenten $U_{nor}$ und $\varphi$ werden dem nicht näher dargestellten Raumzeiger-Modulator des Pulswechselrichters 4 zugeführt.

Der Differenzspannungszeiger $\underline{U}_L$ im Zeigerdiagramm nach Figur 6 ist für die Stromeinprägung in der Synchronmaschine 2 verantwortlich. Die Vektoraddition des Polradspannungszeiger $\underline{E}$ mit dem Differenzspannungszeiger $\underline{U}_L$ ergibt den Raumzeiger der Maschinenspannung $\underline{U}$. Legt man diese Spannung $\underline{U}$ an den einzelnen Strängen der permanenterregten Synchronmaschine 2 an, so werden Stromkurven mit der Forderung nach extrem geringer Momentenwelligkeit eingeprägt. Es ergibt sich dieselbe Ortskurve für den Strom (Figur 2) wie mit dem Stromregelverfahren gemäß der Dissertation. Nur bei kleinen Drehzahlen sind die Regler 58 und 60 in der Lage, diese Differenzspannungen bereitzustellen, so daß ein oberschwingungsbehafteter Strom eingeprägt werden kann, der die Momentenwelligkeit gering hält.

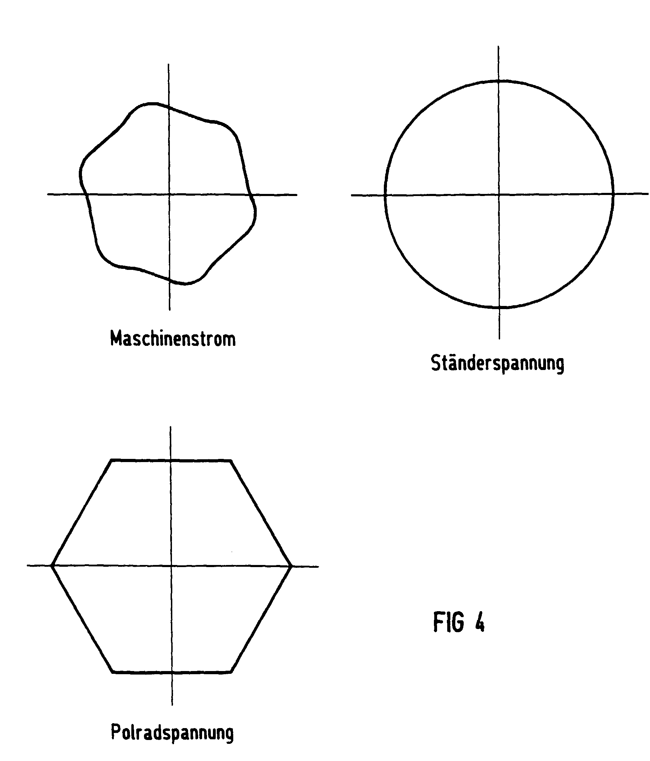

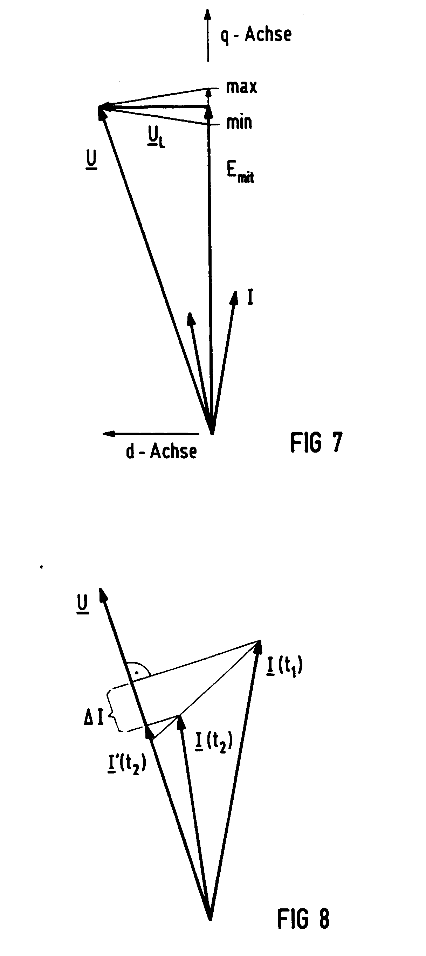

Bei höheren Drehzahlen verändern sich die Ausgangsspannung $dU_q$ und $dU_d$ der Stromregler 58 und 60 kaum noch, da die Stromregler 58 und 60 bei hohen Drehzahlen zu träge sind. Das heißt, es wird eine sinusförmige Eingangsspannung an der Maschine angelegt, deren Ortskurve (Kreis) in Figur 4 in einem Diagramm dargestellt ist. Da die Polradspannung E in der Maschine 2 durch den trapezförmigen Verlauf (Figur 4) oberschwingungsbehaftet ist, bilden sich auch Oberschwingungen im Strom aus. Sie haben zur Folge, daß die kartesischen d- und q-Stromkomponenten nicht mehr konstant sind. Die zugehörige Ortskurve des Stromes $\underline{I}$ ist in der Figur 4 und das Zeigerdiagramm bei sinusförmiger Einspeisung ist in Figur 7 dargestellt.

Die Batterieleistung erhält man aus der Multiplikation der Spannung $\underline{U}$ mit dem projizierten Strom $\underline{I}'(t_2)$ auf den Spannungszeiger $\underline{U}$ (Figur 8). Dabei entsteht ein nicht konstanter projizierter Strom I'. Der Stromanteil $\Delta I$ gibt ein Maß für die Welligkeit der Batterieleistung an. Die Batterieleistung ist nur dann zeitlich konstant, wenn die einzelnen Stromzeigerspitzen genau auf einer Geraden ($\Delta I$=0) liegen, die senkrecht auf der Strangspannung $\underline{U}$ steht. Bei höheren Drehzahlen und steigender Belastung wird der Stromanteil $\Delta I$ kleiner und damit wird die Pendelung der Eingangsleistung reduziert.

Bei einer besonders vorteilhaften Ausführungsform wird als Vorrichtung 46 ein Mikrokontroller, beispielsweise ein 16-Bit-Rechner vom Typ SAB C167, eingesetzt.

Mit diesem erfindungsgemäßen Stromregelverfahren erhält man bei kleinen Drehzahlen eine Reduzierung der Pendelmomente, so daß man ein glattes Drehmoment im Anfahrbereich erhält und bei höheren Drehzahlen eine Verminderung der Batteriestromwelligkeit, wodurch die Batterie eines Elektrofahrzeugs wenig belastet wird. Diese feldorientierte Regelung hat noch zusätzlich den Vorteil, daß eine Feldschwächung der Synchronmaschine 2 sehr leicht durch eine Sollwertvorgabe $I_{dref} \neq 0$ zu realisieren ist.

Dieses erfindungsgemäße Stromregelverfahren ist nicht nur auf die Anwendung bei einem Elektrofahrzeug beschränkt, sondern kann auch bei netzgespeisten Umrichtern, bestehend aus einem netzseitigen Gleichrichter, einem Spannungszwischenkreis und einem Wechselrichter, angewendet werden, wodurch die Netzfreundlichkeit des Umrichters erhöht wird.

**Patentansprüche**

1. Stromregelverfahren für eine dreiphasig stromrichtergespeiste, permanenterregte Synchronmaschine (2) mit einer trapezförmigen Polradspannung (E), wobei auf der Motorwelle (20) eine Winkelmeßeinrichtung (18) angebracht ist, der eine Auswerteschaltung (22) nachgeschaltet ist, an deren Ausgängen ein Drehzahl-Istwert (n) und ein Rotorlagewinkel-Istwert ($\gamma_1$) anstehen, gekennzeichnet durch folgende Verfahrensschritte:

   a) Bestimmung der Polarkomponenten ($I_{Betrag}$, $\alpha$) eines Stromistwert-Raumzeigers aus zwei gemessenen Strangstrom-Istwerten ($I_R$, $I_S$),
   b) Berechnung einer normierten Polradspannung ($E_{nor}$) in Abhängigkeit des ermittelten Rotorlagewinkel-Istwertes ($\gamma_1$),
   c) Multiplikation des ermittelten Strombetrags ($I_{Betrag}$) des Stromistwert-Raumzeigers mit der berechneten normierten Polradspannung ($E_{nor}$),
   d) Transformation der Polarkomponenten ($I^*_{Betrag}$, $\alpha$) dieses bewerteten Stromistwert-Raumzeigers in läuferflußorientierte Stromkomponenten ($I_q$, $I_d$),
   e) Generierung jeweils einer läuferflußorientierten Stellgrößenkomponente ($U_q$, $U_d$) in Abhängigkeit der ermittelten läuferflußorientierten Stromkomponenten ($I_q$, $I_d$) und läuferflußorientierten Sollstromkomponenten ($I_{qref}$, $I_{dref}$) und
   f) Transformation der läuferflußorientierten Stellgrößenkomponenten ($U_q$, $U_d$) in Polarkomponenten ($U_{nor}$, $\pi$) eines Stellgrößen-Raumzeigers.

2. Stromregelverfahren nach Anspruch 1, wobei die momentbildende läuferflußorientierte Stellgrößenkomponente

$(U_q)$ mittels eines Wertes einer mittleren Polradspannung $(E_{mit})$ vorgesteuert wird.

3. Stromregelverfahren nach Anspruch 2, wobei der Wert der mittleren Polradspannung $(E_{mit})$ in Abhängigkeit des ermittelten Drehzahl-Istwertes (n) und einer abgelegten Polradspannungs-Kennlinie ermittelt wird.

4. Stromregelverfahren nach Anspruch 1, wobei bei den Transformationen der ermittelte Polradlagewinkel-Istwert $(\gamma_1)$ vom Winkel $(\alpha)$ des berechneten Stromistwert-Raumzeigers subtrahiert und zum Winkel $(\varepsilon_u)$ des Stellgrößen-Raumzeigers addiert wird.

5. Vorrichtung (46) zur Durchführung des erfindungsgemäßen Stromregelverfahrens nach Anspruch 1 für eine dreiphasig stromrichtergespeiste, permanenterregte Synchronmaschine (2) mit einer trapezförmigen Polradspannung (E), wobei auf der Motorwelle (20) eine Winkelmeßeinrichtung (18) mit nachgeschalteter Auswerteschaltung (22) angebracht ist, an deren Ausgängen ein Drehzahl-Istwert (n) und ein Rotorlagewinkel-Istwert $(\gamma_1)$ anstehen, und mit zwei Strommeßeinrichtungen (12, 14), **dadurch gekennzeichnet,** daß die Ausgänge der beiden Strommeßeinrichtungen (12, 14) mit einer Transformationseinrichtung (48) verbunden sind, deren Betragsausgang über einen Multiplizierer (70) und deren Winkelausgang über einen Subtrahierer (74) mit einem Koordinatenumwandler (50) verbunden sind, daß die Ausgänge dieses Koordinatenwandlers (50) jeweils mit einem Vergleicher (54, 56) mit nachgeschaltetem Stromregler (58, 60) verbunden sind, wobei jeweils am positiven Eingang der Vergleicher (54, 56) ein Sollwert $(I_{qref}, I_{dref})$ ansteht, daß die Ausgänge der beiden Stromregler (58, 60) über einen Koordinatenwandler (52) mit einem Dividierer (76) und einem Addierer (68) verbunden sind, daß jeweils am zweiten Eingang des Subtrahierers (74) und des Addierers (68) ein Rotorlagewinkel-Istwert $(\gamma_1)$ ansteht, und daß der zweite Eingang des Multiplizierers (70) über eine Einrichtung (62) zur Bildung eines Wertes einer normierten Polradspannung $(E_{nor})$ mit dem Winkelausgang der Auswerteschaltung (22) verknüpft ist, wobei am zweiten Eingang des Dividierers (76) der Wert einer Zwischenkreisspannung $(U_{bat})$ ansteht.

6. Vorrichtung (46) nach Anspruch 5, **dadurch gekennzeichnet**, daß der Ausgang eines Reglers (58) über einen Addierer (66) mit dem Koordinatenwandler (52) verknüpft ist, wobei sein zweiter Eingang über einen Multiplizierer (72) mit dem Ausgang eines Kennliniengebers (64) verknüpft ist, der eingangsseitig mit dem Drehzahlausgang der Auswerteschaltung (22) verknüpft ist.

7. Vorrichtung (46) nach Anspruch 5, **dadurch gekennzeichnet**, daß als Vorrichtung (46) ein Mikrokontroller vorgesehen ist.

## Claims

1. Current regulation method for a synchronous machine (2), which is supplied with three phases from a converter and has permanent-magnet excitation, having a trapezoidal rotor voltage (E), an angle measuring device (18) being fitted on the motor shaft (20), downstream of which there is an evaluation circuit (22) at whose outputs a rotation speed actual value (n) and a rotor position angle actual value $(\gamma_1)$ are present, characterized by the following method steps:

    a) Determination of the polar components $(I_{magnitude}, \alpha)$ of a current actual value space vector from two measured phase current actual values $(I_R, I_S)$,
    b) Calculation of a normalized rotor voltage $(E_{nor})$ as a function of the determined rotor position angle actual value $(\gamma_1)$,
    c) Multiplication of the determined current magnitude $(I_{magnitude})$ of the current actual value space vector by the calculated normalized rotor voltage $(E_{nor})$,
    d) Transformation of the polar components $(I^*_{magnitude}, \alpha)$ of this assessed current actual value space vector into rotor-flux-oriented. current components $(I_q, I_d)$,
    e) Generation of in each case one rotor-flux-oriented manipulated variable component $(U_q, U_d)$ as a function of the determined rotor-flux-oriented current components $(I_q, I_d)$ and rotor-flux-oriented reference current components $(I_{qref}, I_{dref})$ and
    f) Transformation of the rotor-flux-oriented manipulated variable components $(U_q, U_d)$ into polar components $(U_{nor}, \pi)$ of a manipulated, variable space vector.

2. Current regulation method according to Claim 1, the torque-forming rotor-flux-oriented manipulated variable component $(U_q)$ being initially controlled by means of a value of a mean rotor voltage $(E_{mean})$

3. Current regulation method according to Claim 2, the value of the mean rotor voltage ($E_{mean}$) being determined as a function of the determined rotation speed actual value (n) and of a stored rotor voltage characteristic.

4. Current regulation method according to Claim 1, the determined rotor position angle actual value ($\gamma_1$) being subtracted, during the transformation, from the angle ($\alpha$) of the calculated current actual value space vector and being added to the angle ($\varepsilon_u$) of the manipulated variable space vector.

5. Apparatus (46) for carrying out the current regulation method according to the invention in accordance with Claim 1 for a synchronous machine (2), which is supplied with three phases from a converter and has permanent-magnet excitation, having a trapezoidal rotor voltage (E), an angle measuring device (18) being fitted on the motor shaft (20) with an evaluation circuit (22) connected downstream, at whose outputs a rotation speed actual value (n) and a rotor position angle actual value ($\gamma_1$) are present, and having two current measuring devices (12, 14) characterized in that the outputs of the two current measuring devices (12, 14) are connected to a transformation device (48) whose magnitude outputs are connected to a coordinate converter (50) via a multiplier (70), and whose angle output is connected to said coordinate converter (50) via a subtractor (74), in that the outputs of this coordinate converter (50) are in each case connected to a comparator (54, 56) having a downstream current regulator (58, 60), a reference value ($I_{qref}$, $I_{dref}$) in each case being present at the positive input of the comparators (54, 56), in that the outputs of the two current regulators (58, 60) are connected via a coordinate converter (52) to a divider (76) and to an adder (68), in that a rotor position angle actual value ($\gamma_1$) is in each case present at the second input of the subtractor (74) and of the adder (68), and in that the second input of the multiplier (70) is linked to the angle output of the evaluation circuit (22) via a device (62) for forming a value of a normalized rotor voltage ($E_{nor}$), the value of an intermediate-circuit voltage ($U_{bat}$) being present at the second input of the divider (76).

6. Apparatus (46) according to Claim 5, characterized in that the output of a regulator (58) is linked via an adder (66) to the coordinate converter (52), its second input being linked via a multiplier (72) to the output of a characteristic transmitter (64) which is linked on the input side to the rotation speed output of the evaluation circuit (22).

7. Apparatus (46) according to Claim 5, characterized in that a microcontroller is provided as the apparatus (46)

## Revendications

1. Procédé de régulation du courant d'une machine (2) synchrone à excitation permanente, alimentée de manière triphasée par un convertisseur, ayant une tension (E) de roue polaire trapézoïdale, un dispositif (18) de mesure d'angles, en aval duquel est monté un circuit (22) d'exploitation aux sorties duquel sont présentes une valeur (n) réelle de la vitesse de rotation et une valeur ($\gamma_1$) réelle de la position angulaire du rotor, étant monté sur l'arbre (20) du moteur, caractérisé par les étapes de procédé suivantes:

a) on déterminé les composantes ($I_{Betrag}$, $\alpha$) polaires d'un vecteur d'espace de la valeur réelle du courant à partir de deux valeurs ($I_R$, $I_S$) réelles de courant de branche mesurées,
b) on calcule une tension ($E_{nor}$) normée de roue polaire en fonction de la valeur ($\gamma_1$) réelle de la position angulaire du rotor déterminée,
c) on multiplie la valeur absolue ($I_{Betrag}$) de courant du vecteur d'espace de la valeur réelle du courant par la tension ($E_{nor}$) normée de roue polaire calculée,
d) on convertit les composantes ($I^*_{Betrag}$, $\alpha$) polaires de ce vecteur d'espace de la valeur réelle du courant pondéré en composantes ($I_q$, $I_d$) du courant rapportées au flux du rotor,
e) on génère des composantes ($U_q$, $U_d$) de grandeur réglante rapportées au flux du rotor en fonction des composantes ($I_q$, $I_d$) du courant rapportées au flux du rotor obtenues et de composantes ($I_{qref}$, $I_{dref}$) du courant de consigne rapportées au flux du rotor, et
f) on convertit les composantes ($U_q$, $U_d$) de grandeur réglante rapportées au flux du rotor en composantes ($U_{nor}$, $\pi$) polaires d'un vecteur d'espace de grandeur réglante.

2. Procédé de régulation suivant la revendication 1, la composante ($U_q$) de grandeur réglante rapportée au flux du rotor, formant un couple, étant commandée à l'avance au moyen d'une valeur d'une tension (Emit) de roue polaire moyenne.

3. Procédé de régulation suivant la revendication 2, la valeur de la tension ($E_{mit}$) de roue polaire moyenne étant déterminée en fonction de la valeur (n) de vitesse de rotation déterminée et d'une courbe caractéristique de tension de roue polaire mémorisée.

4.  Procédé de régulation suivant la revendication 1, la valeur ($\gamma_1$)) réelle de la position angulaire du rotor étant, lors des transformations, soustraite de l'angle ($\alpha$) du vecteur d'espace de la valeur réelle du courant et additionnée à l'angle ($\varepsilon_u$) du vecteur d'espace de grandeur réglante.

5.  Dispositif (46) de mise en oeuvre du procédé de régulation du courant conforme à l'invention, suivant la revendication 1, pour une machine (2) synchrone à excitation permanente, alimentée de manière triphasée par un convertisseur, ayant une tension (E) de roue polaire trapézoïdale, un dispositif (18) de mesure d'angles, en aval duquel est monté un circuit (22) d'exploitation aux sorties duquel sont présentes une valeur (n) réelle de la vitesse de rotation et une valeur ($\gamma_1$) réelle de la position angulaire du rotor, étant monté sur l'arbre (20) du moteur, et comportant deux dispositifs (12, 14) de mesure du courant, caractérisé en ce que les sorties des deux dispositifs (12, 14) de mesure du courant sont reliées à un dispositif (48) de transformation dont la sortie de valeur absolue et la sortie d'angle sont reliées, par l'intermédiaire respectivement d'un multiplicateur (70) pour la première et d'un soustracteur (74) pour la seconde, à un convertisseur (50) de coordonnées, en ce que les sorties de ce convertisseur (50) de coordonnées sont reliées chacune à un comparateur (54, 56), en aval duquel est branché un régulateur (58, 60) de courant, une valeur ($I_{qref}$, $I_{dref}$) de consigne étant présente à la sortie positive de chaque comparateur (54, 56), en ce que les sorties des deux régulateurs (58, 60) de courant sont reliées, par l'intermédiaire d'un convertisseur (52) de coordonnées, à un diviseur (76) et à un additionneur, en ce qu'il est présent à la deuxième entrée du soustracteur (74) et à la deuxième entrée de l'additionneur (68) une valeur ($\gamma_1$) réelle de la position angulaire du rotor, et en ce que la deuxième entrée du multiplicateur (70) est combinée, par l'intermédiaire d'un dispositif (62) prévu pour former une valeur d'une tension ($E_{nor}$) normée de roue polaire, à la sortie d'angle du circuit (22) d'exploitation, la valeur d'une tension ($U_{bat}$) de circuit intermédiaire étant présente à la deuxième entrée du diviseur (76).

6.  Dispositif (46) suivant la revendication 5, caractérisé en ce que la sortie d'un régulateur (58) est combinée, par l'intermédiaire d'un additionneur (66), au convertisseur (52) de coordonnées, sa deuxième entrée étant combinée, par l'intermédiaire d'un multiplicateur (72), à la sortie d'un générateur (64) de courbes caractéristiques qui est combiné du côté de l'entrée à la sortie de vitesse de rotation du circuit (22) d'exploitation.

7.  Dispositif (46) suivant la revendication 5, caractérisé en ce qu'il est prévu un microcontrôleur comme dispositif (46).

FIG 1

EP 0 752 170 B1

Maschinenstrom

Ständerspannung

Polradspannung

FIG 2

FIG 3

Maschinenstrom

Ständerspannung

Polradspannung

FIG 4

FIG 5

FIG 6

FIG 7

FIG 8